(19)

Europäisches
Patentamt
European
Patent Office
Office européen
des brevets

(11) **EP 4 546 231 A1**

(12) **EUROPEAN PATENT APPLICATION**

(43) Date of publication:
**30.04.2025 Bulletin 2025/18**

(21) Application number: **23215068.0**

(22) Date of filing: **07.12.2023**

(51) International Patent Classification (IPC):
*G06Q 10/063* (2023.01)     *G06Q 10/30* (2023.01)

(52) Cooperative Patent Classification (CPC):
**G06Q 10/063; G06Q 10/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2023 CN 202311414294**

(71) Applicants:
• **Guangdong Brunp Recycling Technology Co.,
Ltd
Guangdong 528137 (CN)**
• **Hunan Brunp Recycling Technology Co., Ltd.
Changsha, Hunan 410600 (CN)**

(72) Inventors:
• **YU, Haijun**
**Guangdong, 528137 (CN)**
• **XIE, Yinghao**
**Guangdong, 528137 (CN)**
• **ZHANG, Xiaobing**
**Guangdong, 528137 (CN)**
• **LIU, Zhipeng**
**Guangdong, 528137 (CN)**

(74) Representative: **Primiceri, Maria Vittoria et al
Praxi Intellectual Property S.p.A.
Via Leonida Bissolati, 20
00187 Roma (IT)**

Remarks:
Amended claims in accordance with Rule 137(2)
EPC.

(54) **METHOD, DEVICE, EQUIPMENT AND STORAGE MEDIUM FOR ACCOUNTING PRODUCT
CARBON FOOTPRINT BASED ON ICM**

(57) The invention provides a method, a device, an equipment and a storage medium for accounting product carbon footprint based on ICM. The method comprises: acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material; and accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

FIG. 1

EP 4 546 231 A1

**Description**

**TECHNICAL FIELD**

The present invention relates to technical field of accounting carbon footprint, especially relates to a method, a device, an equipment and a storage medium for accounting product carbon footprint based on Integrated Carbon-right Method (ICM).

**BACKGROUND**

Currently, a concept of product carbon footprint is increasingly drawn wide attention all over the world, which refers to an amount of greenhouse gas emission accumulated from direct and indirect activities of goods or services along the entire life cycle of the product. However, there is not a method, device, equipment and storage medium for accounting product carbon footprint based on ICM at present. Under the guidance of the low-carbon economy, more and more enterprises around the world are actively carrying out works on assessment and verification of product carbon footprint, to reduce greenhouse gas emissions, achieve energy conservation and emission reduction, and promote green consumption. Paying attention to the product carbon footprint not only helps the environment protection, but also helps the enterprises to compete in the global product market.

However, in terms of the method for accounting product carbon footprint, ISO 14067 international standard or other accounting methods are mainly used at present. Parameter A in the existing method is specified by the region according to the market situation, however, the specific definition and accounting method are not disclosed to the public, resulting in subjectivity in its operation. In addition, there are still practical problems such as low accuracy and difficulty in using these existing accounting methods. For example, the carbon emissions in the product scrapping stage are included in the relevant accounting formulas. However, the accuracy of the results for accounting is controversial due to the differences between the predicted values and actual values of the scrapping cycle for different products.

Consequently, in view of the above-described problems, there is still no effective solving approaches at present.

**SUMMARY**

With regard to the above-described shortcomings in the prior art, objectives of the present invention are to provide a method, a device, an equipment and a storage medium for accounting product carbon footprint based on ICM, so that subjective factors can be effectively eliminated, and the accuracy for accounting carbon footprint is improved.

In a first aspect, the present invention provides a method for accounting product carbon footprint based on ICM, comprising:

acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material; and

accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

In the present invention, by accounting the carbon footprint via the carbon right factor obtained according to the regional development index, the utilization rate of green product and the recovery rate of recycled material, the effects on carbon emission of development level in different regions, contribution degree for carbon dioxide peaking and carbon neutrality and technique for saving resource can be comprehensively taken into account, and thus the carbon footprint can be directly obtained according to the acquisition instruction. On this basis, the accounting deviation brought by subjective factors can be effectively eliminated, thereby improving the accuracy for accounting carbon footprint.

Further, in view of the fact that the amount of carbon emission is in negative correlation with a carbon right factor obtained according to the regional development index, the utilization rate of green product and the recovery rate of the recycled material, wherein:

the carbon right factor is obtained by multiplying the regional development index representing development level in different regions, the utilization rate of green product representing contribution degree for carbon dioxide peaking and carbon neutrality, and the recovery rate of the recycled material representing a technique for saving resource; and

a carbon right is obtained according to the carbon right factor as well as a first unit carbon emission corresponding to production from a raw material and a second unit carbon emission corresponding to production from a recycled material, so that the carbon right is in negative correlation with the amount of carbon emission, wherein the data of carbon footprint includes the first unit carbon emission and the second unit carbon emission.

In the present invention, the carbon right factor is obtained by the regional development index representing development level in different regions, the utilization rate of green product representing contribution degree for carbon dioxide peaking and carbon neutrality and the recovery rate of recycled material representing a technique for saving resource, to account carbon emission of the raw material and the recycled material during the production process for emission reduction, thereby being able to get rid of subjective effects, and obtain objective and precise amount of carbon emission. Additionally, since the carbon right factor colligates factors of regional development situation, contribution degree for carbon dioxide peaking and carbon neutrality and source saving, the equality of rights for carbon emission in different regions can thereby be convincingly maintained, and different regions can in turn be united to jointly address the challenges posed by climate change.

Further, the carbon right is in negative correlation with the amount of carbon emission, specifically:
the carbon right as an absolute value for a negative portion in the accounting formula for carbon footprint is in negative correlation with the amount of carbon emission, and the carbon emission from production as a positive portion in the accounting formula for carbon footprint is in positive correlation with the amount of carbon emission, so that the accounting formula for carbon footprint is obtained, wherein the data of carbon footprint includes the carbon emission from production.

Further, obtaining the carbon emission from production includes specifically:

obtaining an amount of carbon emission for the raw material according to a proportion of the raw material put into production and the first unit carbon emission, and an amount of carbon emission for the recycled material is obtained according to a proportion of the recycled material and the second unit carbon emission; and

obtaining the carbon emission from production according to a sum of the amount of carbon emission for the raw material and the amount of carbon emission for the recycled material.

Further, the recovery rate of the recycled material is an average recovery rate of the recycled material, wherein the recycled material comprises at least one of nickel, cobalt, manganese or lithium.
Further, the utilization rate of green product comprises regional permeability of new energy product, wherein the permeability of new energy product comprises permeability of new energy vehicle.
Further, the carbon right factor may be expressed as:

$$\alpha = (1 - \beta) \times P_r \times \frac{1}{n}\sum i,$$

wherein $\beta$ is the regional development index, $P_r$ is the permeability of new energy vehicle, $\sum i$ is a sum of recovery rates of any n of nickel, cobalt, manganese or lithium, n is 1, 2, 3 or 4, and $i$ is the recovery rate of nickel, cobalt, manganese or lithium.
For example, the carbon right factor may be expressed as:

$$\alpha = (1 - \beta) \times P_r \times \frac{1}{3}\sum i,$$

wherein $\beta$ is the regional development index, $P_r$ is the permeability of new energy vehicle, $\sum i$ is a sum of the recovery rates of any three of nickel, cobalt, manganese or lithium, and $i$ is the recovery rate of nickel, cobalt, manganese or lithium.
Preferably, the amount of carbon emission may be expressed as:

$$E_M = (1 - R) \times E_V + R \times E_R - \alpha \times (E_V + E_R),$$

wherein $E_M$ is the amount of carbon emission, $R$ is the proportion of the recycled material, $(1 - R)$ is the proportion of the raw material, $E_V$ and $E_R$ are respectively the first unit carbon emission and the second unit carbon emission, and $\alpha$ is the carbon right factor.
In general, parameters used in the present invention can all be directly acquired according to the acquisition instruction. That is, by means of the present invention, accurate investigation of parameters for accounting carbon footprint can be realized, and a possibility of parameters in subjective manipulation can be avoided, thereby being able to guarantee reliability for accounting carbon footprint. In turn, subjective factors can be effectively eliminated, and the accuracy for accounting carbon footprint is improved.

In a second aspect, the present invention provides a device for accounting product carbon footprint based on ICM, comprising a data acquisition unit and a unit for accounting carbon footprint, wherein,

the data acquisition unit is configured to acquire data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material; and

the unit for accounting carbon footprint is configured to account the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

Further, the device further comprises an instruction receiving unit, configured to receive acquisition instruction sent by a user, and to send the acquisition instruction to the unit for accounting carbon footprint, wherein the acquisition instruction comprises the acquisition interval, duration of the period and the system boundary range.

Further, the device further comprises analytical interaction unit, configured to create an analysis report after receiving the amount of carbon emission sent by the unit for accounting carbon footprint, and to send the analysis report to the user.

In a third aspect, the present invention provides an electronic equipment, comprising:

a memory;

one or more processors coupled with the memory; and

one or more application programs, wherein the one or more application programs are stored in the memory and configured to be executed by the one or more processors, and the one or more application programs are configured to execute the method for accounting product carbon footprint based on ICM as described in the first aspect.

In a fourth aspect, the present invention provides a computer readable storage medium storing program code, the program code can be invoked by a processor to execute the method for accounting product carbon footprint based on ICM as described in the first aspect.

## BRIEF DESCRIPTION OF DRAWINGS

Fig. 1 is a schematic flow diagram of a method for accounting product carbon footprint based on ICM provided by Example of the present invention;

Fig. 2 is a schematic diagram of a route for preparing cathode material provided by the present invention;

Fig. 3 is a schematic diagram of a structure of a device I for accounting product carbon footprint based on ICM provided by Example of the present invention;

Fig. 4 is a schematic diagram of a structure of a device II for accounting product carbon footprint based on ICM provided by Example of the present invention; and

Fig. 5 is a schematic diagram of a structure of an electronic equipment provided by the present invention.

## DETAILED DESCRIPTION

The technical solutions in the examples of the present invention will be clearly and completely described below in conjunction with the accompanying drawings of the present invention, and it is obvious that the described examples are only part of the examples of the present invention, but not all examples. Based on the examples in the present invention, all other examples obtained by a person skilled in the art without making creative labor belong to the scope of protection of the present invention.

It is worth noting that the existing methods for accounting carbon footprint include: Simple Cut-off method (Cut-off), ISO14067 standard and CFF (Circular Footprint Formula) method, as well as other typical methods: Direct Calculation Method (DCM). However, none of the methods above can accurately account carbon footprint without subjective factors.

In the case of using the Cut-off method for accounting the carbon footprint during production of raw material, recycling and waste treatment of any products, amount of carbon emission thereof is expressed as $E_M = (1 - R_1) \times E_V + R_1 \times E_R + (1 - R_2) \times E_D$, wherein $E_M$ is the amount of carbon emission, $R_1$ is a proportion of the recycled material used before the production, $(1 - R_1)$ is a proportion of the raw material used before the production, $R_2$ is a proportion of a recyclable portion of a product after being scrapped, $E_V$ and $E_R$ are respectively unit carbon emission corresponding to production from the raw material and unit carbon emission corresponding to production from the recycled material; $E_D$ is a predicted unit carbon emission upon treatment and disposition after being scrapped. The critical point lies in the fact that, $E_D$ is a predicted value, there is difference for the $E_D$ in various production departments or regions (currently or in the future), lacking comparability, resulting in low accuracy and reliability for accounting carbon footprint by means of this method.

In the case of using the ISO14067 standard for accounting, amount of carbon emission thereof is expressed as $E_M = (1 - C) \times E_V + C \times E_V \times A + C \times E_{PP} + E_{Eol} - A \times R \times E_V$, wherein $C$ is a proportion of the recycled material used before the production, $(1 - C)$ is a proportion of the raw material used before the production, $A$ is allocation factor of rights upstream and downstream, $E_{PP}$ is greenhouse gases emission relating to pretreatment of a recovered material, $E_{Eol}$ (being a predicted value) is unit emission and amount of resource consumption during recycling waste battery, $R$ is a recovery rate of the material, and $E_V$ and $E_R$ are respectively unit carbon emission corresponding to production from the raw material and unit carbon emission corresponding to production from the recycled material. The critical point lies in the fact that, $A$ as the allocation factor of rights upstream and downstream for accounting the carbon footprint, seems to be reasonable, however, different regions or users can all use different values to account carbon footprint, thus there exists a certain of subjectivity, resulting in low reliability and applicability in accounting carbon footprint.

In the case of using the CFF method for accounting, amount of carbon emission thereof is expressed as $E_M = (1 - R_1) \times E_V + R_1 \times (A \times E_R + (1 - A) \times E_V \times Q_{in}/Q_p) + R_2 \times \left( (1-A) \times E_{Eol} + (1-A) \times E_V^* \times Q_{out}/Q_p \right)$, wherein $R_1$ is a proportion of the recycled material used before the production, $(1 - R_1)$ is a proportion of the raw material used before the production, $E_V$ is unit carbon emission and amount of resource consumption corresponding to production from the raw material, $E_R$ is unit carbon emission and amount of resource consumption corresponding to production from the recycled material, $R_2$ is a proportion of a recyclable portion in a product, A is a preset factor designated by European union in accordance with the market, $Q_{in}$, $Q_p$ and $Q_{out}$ are respectively a mass of a feedstock by replacing the raw material with the recycled material, a mass of the raw material and a discharging mass by replacing the raw material with the recycled material, $E_{Eol}$ is unit emission and amount of resource consumption during recycling waste battery, $E_{Eol}$ is a predicted value, there is difference for the $E_{Eol}$ in various production departments or regions (currently or in the future), and $E_V^*$ is unit emission and amount of resource consumption for purchasing and processing when hypothetically replacing the raw material with the recycled material. It is very obvious that, $A$ as a preset factor designated by European union in accordance with the market, has same defects as those of ISO14067 standard, and $A$ can use different values for accounting carbon footprint, thus there exists a certain of subjectivity, and uncertainty of variability of A, resulting in poor comparison of results, and resulting in low reliability and applicability in accounting carbon footprint.

In the case of using the direct calculation method for accounting, amount of carbon emission thereof is expressed as $E_M = (1 - R) \times E_V + R \times E_R$, wherein $R$ is the proportion of the recycled material, $(1 - R)$ is the proportion of the raw material, and $E_V$ and $E_R$ are respectively unit carbon emission corresponding to production from the raw material and unit carbon emission corresponding to production from the recycled material. By means of this method, although availability and accuracy of the data can be guaranteed, the effects on accounting carbon footprint of recyclability of raw material and recycled material are not taken into account. That is, the impact of degree of economic development, technology level and utilization rate of green products on accounting carbon footprint in different regions leads to low accuracy and applicability of accounting carbon footprint.

Based on this, the present invention provides a method for accounting product carbon footprint based on ICM (Integrated Carbon-right Method), so as to get rid of subjective factors, and objectively evaluate the amount of carbon emission, thereby improve accuracy and reliability in accounting carbon footprint, with detailed description referring to Examples.

A product of the present application may be a cathode material, for example, NCM (ternary cathode material) or LFP (cathode material of lithium iron phosphate).

Unless otherwise specified, raw material used in the present application are conventional raw material commercially available, and raw material used in Examples or Comparative Examples in parallel of the present application are consistent.

Example 1

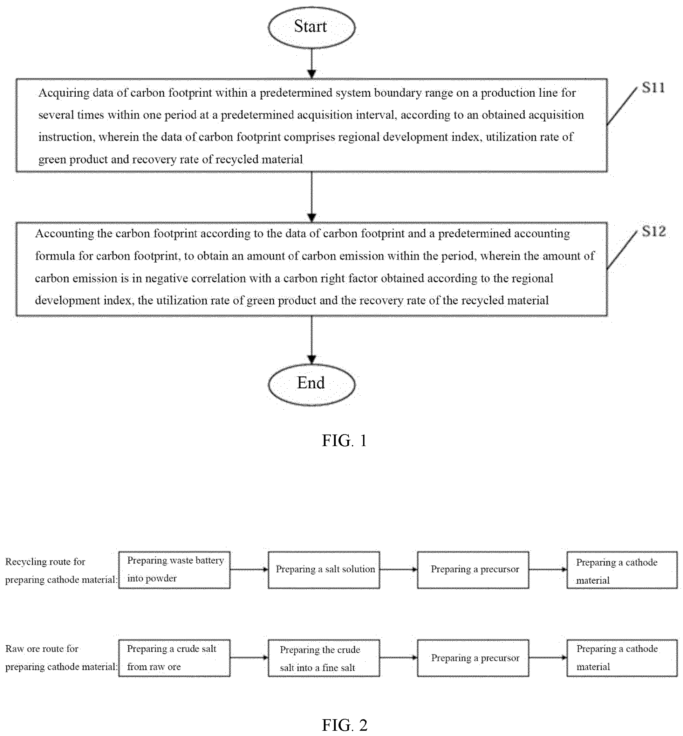

Referring to Fig. 1, a schematic flow diagram of a method for accounting product carbon footprint based on ICM provided by the present invention, comprises steps S11 to S12, specifically as follows.

Step S11, acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material.

It is worth noting that, the acquisition instruction comprises the acquisition interval, duration of the period and the system boundary range.

Step S12, accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

Further, the amount of carbon emission is in negative correlation with a carbon right factor obtained according to the regional development index, the utilization rate of green product and the recovery rate of the recycled material. Specifically, the carbon right factor is obtained by multiplying the regional development index representing development level in different regions, the utilization rate of green product representing contribution degree for carbon dioxide peaking and carbon neutrality, and the recovery rate of the recycled material representing a technique for saving resource. The carbon right is obtained by multiplying the carbon right factor, a first unit carbon emission corresponding to production from a raw material, and a second unit carbon emission corresponding to production from a recycled material, so that the carbon right is in negative correlation with the amount of carbon emission, wherein the data of carbon footprint includes the first unit carbon emission and the second unit carbon emission.

As an optional example, the recovery rate of the recycled material is an average recovery rate of the recycled material, wherein the recycled material comprises at least one of nickel, cobalt, manganese or lithium.

As an optional example, an average recovery rate of four in nickel, cobalt, manganese and lithium is used as the recovery rate of the recycled material. For example, a recovery rate of nickel is ii, a recovery rate of cobalt is $i_2$, a recovery rate of manganese is $i_3$, a recovery rate of lithium is $i_4$, and four in nickel, cobalt, manganese and lithium is selected. Then,

$$\frac{1}{n}\sum i$$

is $(1/4)\times (i_1+ i_2+ i_3+ i_4)$.

As an optional example, an average recovery rate of any three of nickel, cobalt, manganese or lithium is used as the recovery rate of the recycled material.

For example, the recovery rate of nickel is ii, the recovery rate of cobalt is $i_2$, the recovery rate of manganese is $i_3$, the recovery rate of lithium is $i_4$, and three therein are optionally selected, such as nickel, cobalt, and manganese. Then,

$$\frac{1}{n}\sum i$$

is $(1/3)\times (i_1+ i_2+ i_3)$.

For example, the recovery rate of nickel is ii, the recovery rate of cobalt is $i_2$, the recovery rate of manganese is $i_3$, the recovery rate of lithium is $i_4$, and three therein are optionally selected, such as, nickel, cobalt, and lithium. Then, $\frac{1}{n}\sum i$ is $(1/3)\times (i_1+ i_2+ i_4)$.

For example, the recovery rate of nickel is ii, the recovery rate of cobalt is $i_2$, the recovery rate of manganese is $i_3$, the recovery rate of lithium is $i_4$, and three therein are optionally selected, such as, nickel, manganese, and lithium. Then,

$$\frac{1}{n}\sum i$$

is $(1/3)\times (i_1+ i_3+ i_4)$.

For example, the recovery rate of nickel is ii, the recovery rate of cobalt is $i_2$, the recovery rate of manganese is $i_3$, the recovery rate of lithium is $i_4$, and three therein are optionally selected, such as, cobalt, manganese, and lithium. Then,

$$\frac{1}{n}\sum i$$

is $(1/3)\times (i_2+ i_3+ i_4)$.

As a preferred example, an average recovery rate of any two of nickel, cobalt, manganese or lithium is used as the recovery rate of the recycled material.

For example, the recovery rate of nickel is ii, the recovery rate of cobalt is $i_2$, the recovery rate of manganese is $i_3$, the recovery rate of lithium is $i_4$, and two therein are optionally selected, such as nickel, and cobalt. Then, $\frac{1}{n}\sum i$ is $(1/2)\times (i_1+ i_2)$.

For example, the recovery rate of nickel is ii, the recovery rate of cobalt is $i_2$, the recovery rate of manganese is $i_3$, the recovery rate of lithium is $i_4$, and two therein are optionally selected, such as nickel, and manganese. Then, $\frac{1}{n}\sum i$ is $(1/2)\times (i_1+ i_3)$.

For example, the recovery rate of nickel is ii, the recovery rate of cobalt is $i_2$, the recovery rate of manganese is $i_3$, the recovery rate of lithium is $i_4$, and two therein are optionally selected, such as nickel, and lithium. Then, $\frac{1}{n}\sum i$ is $(1/2)\times (i_1 + i_4)$.

For example, the recovery rate of nickel is ii, the recovery rate of cobalt is $i_2$, the recovery rate of manganese is $i_3$, the recovery rate of lithium is $i_4$, and two therein are optionally selected, such as cobalt, and manganese. Then, $\frac{1}{n}\sum i$ is $(1/2)\times (i_2 + i_3)$.

For example, the recovery rate of nickel is ii, the recovery rate of cobalt is $i_2$, the recovery rate of manganese is $i_3$, the recovery rate of lithium is $i_4$, and two therein are optionally selected, such as cobalt, and lithium. Then, $\frac{1}{n}\sum i$ is $(1/2)\times (i_2 + i_4)$.

For example, the recovery rate of nickel is ii, the recovery rate of cobalt is $i_2$, the recovery rate of manganese is $i_3$, the recovery rate of lithium is $i_4$, and two therein are optionally selected, such as manganese, and lithium. Then, $\frac{1}{n}\sum i$ is $(1/2)\times (i_3 + i_4)$.

As an optional example, average recovery rate of any one of nickel, cobalt, manganese or lithium is used as the recovery rate of the recycled material.

For example, the recovery rate of nickel is ii, the recovery rate of cobalt is $i_2$, the recovery rate of manganese is $i_3$, the recovery rate of lithium is $i_4$, and one therein is optionally selected, such as nickel. Then, $\frac{1}{n}\sum i$ is $(1/1)\times (i_1)$.

For example, the recovery rate of nickel is ii, the recovery rate of cobalt is $i_2$, the recovery rate of manganese is $i_3$, the recovery rate of lithium is $i_4$, and one therein is optionally selected, such as cobalt. Then, $\frac{1}{n}\sum i$ is $(1/1)\times (i_2)$.

For example, the recovery rate of nickel is ii, the recovery rate of cobalt is $i_2$, the recovery rate of manganese is $i_3$, the recovery rate of lithium is $i_4$, and one therein is optionally selected, such as manganese. Then, $\frac{1}{n}\sum i$ is $(1/1)\times (i_3)$.

For example, the recovery rate of nickel is ii, the recovery rate of cobalt is $i_2$, the recovery rate of manganese is $i_3$, the recovery rate of lithium is $i_4$, and one therein is optionally selected, such as lithium. Then, $\frac{1}{n}\sum i$ is $(1/1)\times (i_4)$.

As a preferred example, average recovery rate of nickel, cobalt and manganese is used as the recovery rate of the recycled material.

As an optional example, the utilization rate of green product comprises regional permeability of new energy product, wherein the permeability of new energy product comprises permeability of new energy vehicle.

It should be noted that, if the permeability of new energy vehicle is used, the permeability of new energy vehicle in regions can be directly inquired and obtained on the official websites in regions. Also, the permeability of new energy product may also be permeability of photovoltaic cell, or permeability of lithium battery etc.

As an optional embodiment, the carbon right factor may be expressed as:

$$\alpha = (1 - \beta) \times P_r \times \frac{1}{n}\sum i,$$

wherein $\beta$ is the regional development index, $P_r$ is the permeability of new energy vehicle, $\sum i$ is a sum of recovery rates of any n of nickel, cobalt, manganese or lithium, n is 1, 2, 3 or 4, and $i$ is the recovery rate of nickel, cobalt, manganese or lithium.

For example, the recovery rate of nickel may be $\geq 90\%$ (or $\geq 99\%$), the recovery rate of cobalt may be $\geq 90\%$ (or $\geq 99\%$), the recovery rate of manganese may be $\geq 90\%$ (or $\geq 99\%$), and the recovery rate of lithium may be $\geq 80\%$ (or $\geq 60\%$). For example, the recovery rate of nickel may be 99.3%, the recovery rate of cobalt may be 99.3%, the recovery rate of manganese may be 99.3%, and the recovery rate of lithium may be 90%.

For example, as a preferred example, the carbon right factor may be expressed as:

$$\alpha = (1 - \beta) \times P_r \times \frac{1}{3}\sum i,$$

wherein $\beta$ is the regional development index, $P_r$ is the permeability of new energy vehicle, $\sum i$ is a sum of the recovery rates of any three of nickel, cobalt, manganese or lithium, and $i$ is the recovery rate of nickel, cobalt, manganese or lithium.

As a preferred example, the regional development index comprises: UN Human Development Index in countries and regions.

It should be noted that, the regional development index published by United Nation every year, can be directly referred to United Nation Human Development Index in countries and regions, which is obtained from Human Development Reports (undp.org).

It should be noted that, regions with lower development level have lower $\beta$ value, and based on ICM, burden alleviation for carbon emission can be made for this region, contributing to maintaining equality of rights for carbon emission. Consequently, comprehensive development level in different regions can be taken into account via the carbon right factor, thereby improving the accuracy for accounting carbon emission.

Next, the carbon right factor reflects contribution degree to global business for reduction of carbon emission through the permeability of new energy product in this region. For a region with high popularizing rate of new energy products, more burden alleviation for carbon emission will be obtained, contributing to enhancement of environmental awareness, and extending more low-carbon new energy product.

The carbon right is in negative correlation with the amount of carbon emission, specifically: the carbon right as an absolute value for a negative portion in the accounting formula for carbon footprint is in negative correlation with the amount of carbon emission, and the carbon emission from production as a positive portion in the accounting formula for carbon footprint is in positive correlation with the amount of carbon emission, so that the accounting formula for carbon footprint is obtained, wherein the data of carbon footprint includes the carbon emission from production.

Obtaining the carbon emission from production includes specifically: obtaining an amount of carbon emission for the raw material according to a proportion of the raw material put into production and the first unit carbon emission, and obtaining an amount of carbon emission for the recycled material according to a proportion of the recycled material and the second unit carbon emission; and the carbon emission from production is obtained according to a sum of the amount of carbon emission for the raw material and the amount of carbon emission for the recycled material.

As a preferred example, the amount of carbon emission may be expressed as:

$$E_M = (1 - R) \times E_V + R \times E_R - \alpha \times (E_V + E_R),$$

wherein $E_M$ is the amount of carbon emission, $R$ is the proportion of the recycled material, $(1 - R)$ is the proportion of the raw material, $E_V$ and $E_R$ are respectively the first unit carbon emission and the second unit carbon emission, and $\alpha$ is the carbon right factor.

As compared to the prior art, the present invention doesn't apply a predicted value in the ICM accounting formula. In the present invention, all results are obtained based on real-world data, and the accounting process is simple, which reduces the workload of carbon accounting, and is also convenient to measure the differences between different enterprises or different products, with high applicability.

It is worth noting that, in the accounting formula for carbon footprint for the amount of carbon emission, $(1 - R) \times E_V + R \times E_R$ is carbon emission from production, and $\alpha \times (E_V + E_R)$ is carbon right. $(1 - R) \times E_V$ is carbon emission produced by raw ore material used during the production process, $R \times E_R$ is carbon emission produced by the recycled material (or waste battery) used during the production process. The production process refers to various links for producing lithium battery or producing material of lithium battery, comprising any one link corresponding to cathode electrode, anode electrode, precursors, electrolytic solution or diaphragm.

The carbon right factor takes the technique for saving resource into account, and can evaluate and promote saving source and use of the recovered material according to the obtained carbon right. If a manufacturer and a recycler for a product reach a strategic cooperation agreement, the recycling and reuse of waste products can be promoted, and the average recovery rate of nickel, cobalt and lithium from recyclers directly affects the degree of carbon reduction. Therefore, the carbon right factor helps to increase the awareness of product recycling and reuse, and indirectly promotes the improvement of recycling technology, so as to achieve the coordinated development of the whole industry chain.

It should be noted that, the amount of carbon emission is the amount of emission of greenhouse gases (GHG) related to the production stage and carbon right of the product, and with the unit thereof being (kg $CO_2$/kg). That is, the corresponding $CO_2$ for per 1 kg of product being produced is $E_M$. The first unit carbon emission refers to the amount of unit carbon emission of raw material used in the production process of the product, with the unit thereof being (kg $CO_2$/kg), with raw material used in the production process, the number of kg of $CO_2$ produced by energy consumption for per 1 kg of products. The second unit carbon emission refers to the amount of unit carbon emission of the recycled material used in the production process of the product, with the unit thereof being (kg $CO_2$/kg), with the recycled material used in the production process, the number of kg of $CO_2$ produced by the energy consumed for per 1 kg of product, and the unit of unit carbon emission is also (kg $CO_2$/kg).

It should be noted that, a proportion of the recycled material comprises the recycled material used during the production process for battery, that is, to obtain a mass proportion of at least one of nickel, cobalt, manganese or lithium being able to obtained by recycling from waste battery.

It should be noted that, when accounting the carbon footprint, the material put on production comprises two types: a raw material (i.e., raw ore), and a recycled material (i.e., the recovered material). In other words, material used in production for a product comprises two portions, one portion being raw ore, the other portion being the recycled material, or at least one of nickel, cobalt, manganese or lithium which can be obtained by recycling from waste battery.

For example, $R$ in ICM refers to: a proportion of the recycled material put on production, i.e., the mass proportion of the recycled material used in the production process for lithium battery (i.e., nickel, cobalt, manganese, and/or lithium obtained by recycling from waste battery).

As a preferred example, according to duration of the period, average amount of carbon emission within the period is used as final result for accounting carbon footprint.

In the present invention, by accounting the carbon footprint via the carbon right factor obtained according to the regional development index, the utilization rate of green product and the recovery rate of recycled material, the effects on carbon emission of development level in different regions, contribution degree for carbon dioxide peaking and carbon neutrality and technique for saving resource can be comprehensively taken into account, and the carbon footprint can be directly obtained according to the acquisition instruction. On this basis, the accounting deviation brought by subjective factors can be effectively eliminated, thereby improving the accuracy for accounting carbon footprint.

Example 2

This example illustrates a method for accounting product carbon footprint based on ICM according to a specific production process to obtain an amount of carbon emission, comprising: a recycling route for preparing cathode material and a raw ore route for preparing cathode material. Referring to Fig. 2, it shows a schematic diagram for a route for preparing cathode material provided by the present invention. In the figure, the recycling route for preparing cathode material comprises: obtaining waste battery and preparing it into powder, preparing the powder into a salt solution, preparing a precursor according to the salt solution, and preparing a cathode material according to the precursor. The raw ore route for preparing cathode material comprises: obtaining a crude salt from raw ore, preparing the crude salt into a fine salt, preparing a precursor according to the fine salt, and preparing a cathode material.

By the method for accounting product carbon footprint based on ICM, amounts of carbon emission for ternary cathode material and lithium iron phosphate in the two routes may be obtained respectively, referring to Table 1.

Table 1 Amounts of carbon emission for ternary cathode material and lithium iron phosphate in the two routes

| Carbon emission for the recycling route | Amount of carbon emission | $E_R$ |
|---|---|---|
| | | Preparing cathode material (kg $CO_2$/kg) |
| | NCM (ternary cathode material) | 12.59 |
| | LFP (cathode material of lithium iron phosphate) | 14.08 |
| Carbon emission for the raw ore route | Amount of carbon emission | $E_V$ |
| | | Preparing cathode material (kg $CO_2$/kg) |
| | NCM (ternary cathode material) | 22.72 |
| | LFP (cathode material of lithium iron phosphate) | 25.65 |

Also, carbon emission coefficients of electricity, steam, natural gas, and water consumed during the process for preparing cathode material is shown in Table 2.

Table 2 Carbon emission coefficients for electricity, steam, natural gas, and water consumed during the process for preparing cathode material

| Type | carbon emission coefficient | Unit |
|---|---|---|
| Electricity | 0.77098 | kg/kwh |
| Steam | 0.33276 | kg/kg |
| Natural gas | 0.281 | kg/m$^3$ |

(continued)

| Type | carbon emission coefficient | Unit |
|---|---|---|
| Water | 0.00941 | kg/kg |

In the present invention, by accounting the carbon footprint via the carbon right factor obtained according to the regional development index, the utilization rate of green product and the recovery rate of recycled material, the effects on carbon emission of regions development level, contribution degree for carbon dioxide peaking and carbon neutrality and technique for saving resource can be comprehensively taken into account, and the carbon footprint can be directly obtained according to the acquisition instruction. On this basis, accounting deviation brought by subjective factors can be effectively eliminated, thereby improving the accuracy for accounting carbon footprint for carbon emission for the recycling route and carbon emission for the raw ore route.

Example 3

Comparing the method for accounting carbon footprint based on ICM of the present invention with the prior art comprising ISO 14067 standard, CFF method and Cut-off method, in order to better observe the effect of A in the CFF method for accounting the amount of carbon emission, two CFF comparative groups are established, and parameters are specifically set up.

In accordance with the ISO14067 standard, carbon right portion is not calculated, and $E_{Eol}$ therein is a predicted value, lacking objectiveness.

In accordance with the CFF method, the carbon right is not taken into account, and A value therein is in artificial control, lacking objectiveness. For example, a first group of A value may be set to 0.2, and a second group of A value may be set to 0.8. when A value changes from 0.2 to 0.8, the amount of carbon emission changes significantly. Thus, when A value is modified according to subjective factors, a deviation in amount of carbon emission is rendered to be big, with low reliability thereof.

In accordance with the Cut-off method, since carbon emission of a battery after retirement is not taken into account by itself, i.e., amount of carbon emission thereof is 0 kg $CO_2$/kg. In other words, the amount of carbon emission for waste battery is evaluated to be 0 in this method. However, this does not conform to the practical situation, indicating unreliable accuracy thereof for detecting amount of carbon emission of a small product.

In accordance with the ICM method of the present invention, when for example, three of nickel, cobalt, manganese, and lithium are selected, such as nickel, cobalt, and lithium, carbon right factor is calculated:

$$\alpha = (1 - \beta) \times P_r \times \frac{1}{3} \sum i = (1-0.768) \times 0.256 \times 0.962 = 0.057$$

, carbon right portion is calculated: $-\alpha \times P_r (E_V + E_R) = 0.057 \times (22.72 + 12.59) = -2.01$ kg $CO_2$/kg (i.e., 2.01 kg of emission of $CO_2$ is reduced when 1 kg of a product is prepared), and parameters thereof may be setup, including: $\alpha=0.057$, $\beta = 0.768$, $P_r=0.256$, $\frac{1}{3} \sum i = 96.2\%$, $E_R=12.59$ kg $CO_2$/kg, $E_V=22.72$ kg $CO_2$/kg, and R=13% (R in ICM is the proportion of the recycled material put on production).

$$E_M = (1 - R) \times E_V + R \times E_R - \alpha \times (E_V + E_R) = (1-0.13) \times 22.72 + 0.13 \times 12.59 - 2.01$$

$$= 19.39 \text{ kg } CO_2/\text{kg}.$$

The parameters of the present invention are set up specifically by inquiring development index published by United Nation to obtain $\alpha$ value, inquiring the permeability of new energy vehicle in China in the statistics on the official website to obtain $\beta$ value, and obtaining an average recovery rate of nickel, cobalt and lithium according to recycling process of the present application, with the recovery rate of nickel being 99.3%, the recovery rate of cobalt being 99.3%, and the recovery rate of lithium being 90%, where $\frac{1}{3} \sum i$ value= (1/3)$\times$ (99.3%+99.3%+90%)=96.2%. $E_R$ value is obtained by counting carbon emission for production of cathode material from the recycled material, and $E_V$ value is obtained by counting carbon emission for production of cathode material from raw ore.

ICM provided by the present invention synthesizes factors in aspects, and data thereof can be directly acquired without effects of subjective factors, taking the regional development index in this regions itself, the utilization rate of green product and the recovery rate of the recycled material into account. In comparison with other methods, amount of carbon emission thereof is objective, and it is indicated by the negative value of the amount of carbon emission that the recycling process and mechanism in this region are scientific, this region does not increase the amount of carbon emission, and even achieves emission reduction. In contrast, accounting of the amount of carbon emission the present invention is more scientific and accurate.

Example 4

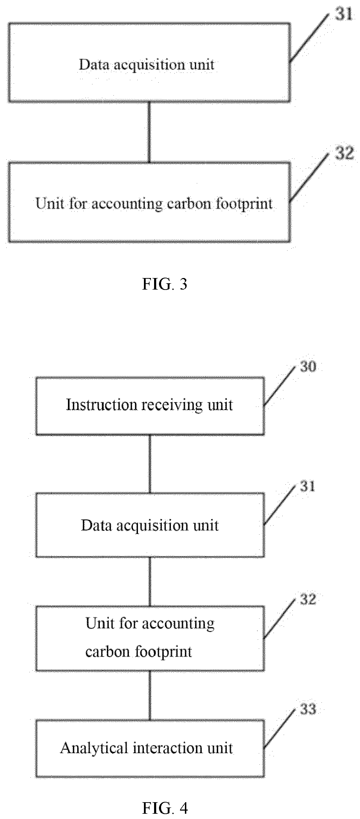

Referring to Fig. 3, it shows a schematic diagram of a structure of a device I for accounting product carbon footprint based on ICM provided by the present invention, comprising a data acquisition unit 31 and a unit for accounting carbon footprint 32.

The data acquisition unit 31 is configured to acquire data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material.

The unit for accounting carbon footprint 32 is configured to account the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

In view of the fact that the amount of carbon emission is in negative correlation with a carbon right factor obtained according to the regional development index, the utilization rate of green product and the recovery rate of the recycled material, wherein: the carbon right factor is obtained by multiplying the regional development index representing development level in different regions, the utilization rate of green product representing contribution degree for carbon dioxide peaking and carbon neutrality, and the recovery rate of the recycled material representing a technique for saving resource; and the carbon right is obtained according to the carbon right factor as well as a first unit carbon emission corresponding to production from a raw material and a second unit carbon emission corresponding to production from a recycled material, so that the carbon right is in negative correlation with the amount of carbon emission, wherein the data of carbon footprint includes the first unit carbon emission and the second unit carbon emission.

The carbon right is in negative correlation with the amount of carbon emission, specifically: the carbon right as an absolute value for a negative portion in the accounting formula for carbon footprint is in negative correlation with the amount of carbon emission, and the carbon emission from production as a positive portion in the accounting formula for carbon footprint is in positive correlation with the amount of carbon emission, so that the accounting formula for carbon footprint is obtained, wherein the data of carbon footprint includes the carbon emission from production.

Obtaining the carbon emission from production includes specifically: obtaining an amount of carbon emission for the raw material according to a proportion of the raw material put into production and the first unit carbon emission, and obtaining an amount of carbon emission for the recycled material according to a proportion of the recycled material and the second unit carbon emission; and the carbon emission from production is obtained according to a sum of the amount of carbon emission for the raw material and the amount of carbon emission for the recycled material.

As an optional example, the recovery rate of the recycled material is an average recovery rate of the recycled material, wherein the recycled material comprises at least one of nickel, cobalt, manganese or lithium.

As an optional example, the utilization rate of green product comprises regional permeability of new energy product, wherein the permeability of new energy product comprises permeability of new energy vehicle.

Preferably, the amount of carbon emission may be expressed as:

$$E_M = (1 - R) \times E_V + R \times E_R - \alpha \times (E_V + E_R),$$

wherein $E_M$ is the amount of carbon emission, $R$ is the proportion of the recycled material, $(1 - R)$ is the proportion of the raw material, $E_V$ and $E_R$ are respectively the first unit carbon emission and the second unit carbon emission, and $\alpha$ is the carbon right factor.

In the present invention, the data acquisition unit 31 collects data of carbon footprint through an obtained acquisition instruction, and sends the data of carbon footprint to a unit for accounting carbon footprint 32. The unit for accounting carbon footprint 32 accounts the carbon footprint in accordance with a carbon right factor obtained according to regional development index, utilization rate of green product and recovery rate of recycled material in the received data of carbon footprint. Effects on carbon emission of development level in different regions, contribution degree for carbon dioxide peaking and carbon neutrality and technique for saving resource can be comprehensively taken into account, and the carbon footprint can be directly obtained according to the acquisition instruction. On this basis, the accounting deviation brought by subjective factors can be effectively eliminated, thereby improving the accuracy for accounting carbon footprint.

As a preferred example, the device for accounting product carbon footprint based on ICM further comprises an instruction receiving unit 30 configured to receive acquisition instruction sent by a user, and to send the acquisition instruction to the unit for accounting carbon footprint 32, wherein the acquisition instruction comprises the acquisition interval, duration of the period and the system boundary range.

The device for accounting product carbon footprint based on ICM further comprises an analytical interaction unit 33 configured to create analysis report after receiving the amount of carbon emission, and to send the analysis report to the user.

As a preferred example, the unit for accounting carbon footprint 32 further obtains average amount of carbon emission within the period according to the duration of the period, and transmits the average amount of carbon emission to the analytical interaction unit 33.

Referring to Fig. 4, it is a schematic diagram of a structure of a device II for accounting product carbon footprint based on ICM provided by Example of the present invention, as shown in the figure, comprising: the instruction receiving unit 30, the data acquisition unit 31, the unit for accounting carbon footprint 32 and the analytical interaction unit 33.

As a preferred example, the analytical interaction unit 33 creates a corresponding analysis report after receiving the average amount of carbon emission sent by the unit for accounting carbon footprint 32, and sends the analysis report to the user.

In the present invention, by integrating specific modules according to their functions and interaction of specific modules with each other, the device for accounting product carbon footprint based on ICM can be extended, thereby possessing high applicability and practicability.

Example 5

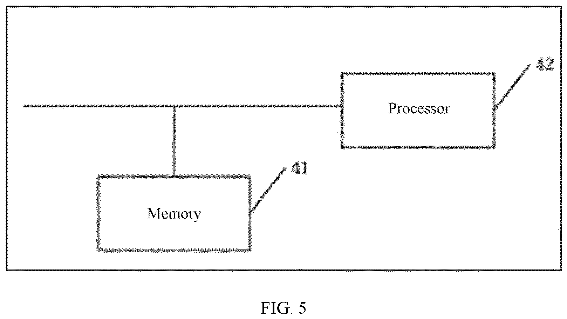

Referring to Fig. 5, it is a schematic diagram for a structure of an electronic equipment provided by the present invention. In the figure, the equipment comprises a memory 41; one or more processors 42 coupled with the memory 41; one or more application programs, wherein the one or more application programs are stored in the memory 41 and configured to be executed by the one or more processors 42, and configured to execute the method for accounting product carbon footprint based on ICM as described.

In the present invention, by integrating the method for accounting product carbon footprint based on ICM into a specific electronic equipment, carbon emission in different regions can be rapidly accounted, thereby possessing high practicability.

Example 6

The present invention provides a computer readable storage medium storing program code, the program code can be invoked by a processor to execute the method for accounting product carbon footprint based on ICM as described.

In the present invention, the method for accounting product carbon footprint based on ICM is written into program code, so as to automatically and rapidly account carbon emission in different regions, thereby improving the automation for accounting product carbon footprint based on ICM, facilitating to application in more products, being convenient for monitoring situation of carbon emission of a product, and possessing high practicability.

It should be clear to those skilled in this field that, examples of the present application may also provide a product comprising the computer program. Consequently, the present application can adopt Example forms of a complete hardware Example, a complete software Example, or a combination Example of software and hardware. Moreover, the present application can adopt such a form that a computer programed product is executed on one or more computer-usable storage medium (comprising and not limited to a disk memory, CD-ROM, and optical memory etc.) which contains a computer-usable program code.

This application is described by reference to flow charts and/or block diagrams of methods, equipment (systems), and computer program products based on examples of this application. It should be understood that each process and/or block in a flowchart and/or block diagram, and a combination of processes and/or blocks in a flowchart and/or block diagram, can be implemented by a computer program instruction. These computer program instructions can be supplied to a general-purpose computer, a special purpose computer, an embedded processor, or a processor of other programmable data processing equipment to produce a machine, and thus produce a device which realizes a function specified in one flow or more flows in a flow diagram and/or one block or more blocks in a block diagram, by executing instructions via the processor of a computer or other programmable data processing apparatuses.

These computer program instructions can also be stored in a computer-readable memory capable of directing a computer or other programmable data processing apparatuses to work in a particular manner, so that the instructions stored in this computer-readable memory produce manufactured goods including an instruction device, which realizes a function specified in one flow or more flows in a flow diagram and/or one block or more blocks in a block diagram.

These computer program instructions can also be loaded onto a computer or other programmable data processing apparatus, so that a series of operational steps are performed on the computer or other programmable data processing apparatuses to produce computer-implemented processing. Thereby, instructions executed on the computer or other programmable apparatuses provide steps to implement a function specified in one flow or more flows in a flow diagram and/or one block or more blocks in a block diagram.

The above-described contents are only preferred examples of the present invention. It should be noted that, for those of ordinary skill in this technical field, some improvements and variants can also be made without departing from the technical principle of the present invention, and these improvements and variants should also be regarded as the protection scope of the present invention.

**Claims**

1.  A method for accounting product carbon footprint based on Integrated Carbon-right Method, ICM, comprising:

    acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material (S11); and
    accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material (S12).

2.  The method for accounting product carbon footprint based on ICM according to claim 1, wherein the amount of carbon emission is in negative correlation with a carbon right factor obtained according to the regional development index, the utilization rate of green product and the recovery rate of the recycled material, wherein:

    the carbon right factor is obtained by multiplying the regional development index representing development level in different regions, the utilization rate of green product representing contribution degree for carbon dioxide peaking and carbon neutrality, and the recovery rate of the recycled material representing a technique for saving resource; and
    a carbon right is obtained according to the carbon right factor as well as a first unit carbon emission corresponding to production from a raw material and a second unit carbon emission corresponding to performing production from a recycled material, resulting in that the carbon right is in negative correlation with the amount of carbon emission, wherein the data of carbon footprint includes the first unit carbon emission and the second unit carbon emission.

3.  The method for accounting product carbon footprint based on ICM according to claim 2, wherein the carbon right is in negative correlation with the amount of carbon emission, comprising:
    the carbon right as an absolute value for a negative portion in the accounting formula for carbon footprint is in negative correlation with the amount of carbon emission, and the carbon emission from production as a positive portion in the accounting formula for carbon footprint is in positive correlation with the amount of carbon emission, resulting in that the accounting formula for carbon footprint is obtained, wherein the data of carbon footprint includes the carbon emission from production.

4.  The method for accounting product carbon footprint based on ICM according to claim 3, wherein obtaining the carbon emission from production comprising:

    obtaining an amount of carbon emission for the raw material according to a proportion of the raw material put into production and the first unit carbon emission, and obtaining an amount of carbon emission for the recycled material according to a proportion of the recycled material and the second unit carbon emission; and
    obtaining the carbon emission from production according to a sum of the amount of carbon emission for the raw material and the amount of carbon emission for the recycled material.

5.  The method for accounting product carbon footprint based on ICM according to any one of claims 1-2, wherein the recovery rate of the recycled material is an average recovery rate of the recycled material, wherein the recycled material comprises at least one of nickel, cobalt, manganese or lithium,

    the utilization rate of green product comprises regional permeability of new energy product, wherein the permeability of new energy product comprises permeability of new energy vehicle;

the carbon right factor is expressed as:

$$\alpha = (1 - \beta) \times P_r \times \frac{1}{n}\sum i,$$

wherein, $\beta$ is the regional development index, $P_r$ is the permeability of new energy vehicle, $\sum i$ is a sum of recovery rates of any n of nickel, cobalt, manganese or lithium, n is 1, 2, 3 or 4, and $i$ is the recovery rate of nickel, cobalt, manganese or lithium.

6. The method for accounting product carbon footprint based on ICM according to any one of claims 1-4, wherein the amount of carbon emission is expressed as:

$$E_M = (1 - R) \times E_V + R \times E_R - \alpha \times (E_V + E_R),$$

wherein, $E_M$ is the amount of carbon emission, $R$ is the proportion of the recycled material, (1 - $R$) is the proportion of the raw material, $E_V$ and $E_R$ are respectively the first unit carbon emission and the second unit carbon emission, and $\alpha$ is the carbon right factor.

7. A device for accounting product carbon footprint based on ICM, comprising a data acquisition unit and a unit for accounting carbon footprint, wherein,

the data acquisition unit is configured to acquire data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material; and
the unit for accounting carbon footprint is configured to account the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material.

8. The device for accounting product carbon footprint based on ICM according to claim 7, further comprising: an instruction receiving unit, configured to receive acquisition instruction sent by a user, and to send the acquisition instruction to the unit for accounting carbon footprint, wherein the acquisition instruction comprises the acquisition interval, duration of the period and the system boundary range, and
an analytical interaction unit, configured to create an analysis report after receiving the amount of carbon emission sent by the unit for accounting carbon footprint, and to send the analysis report to the user.

9. An electronic equipment, comprising:

a memory;
one or more processors coupled with the memory; and
one or more application programs, wherein the one or more application programs are stored in the memory and configured to be executed by the one or more processors, and the one or more application programs is configured to execute the method for accounting product carbon footprint based on ICM according to any one of claims 1 to 6.

10. A computer readable storage medium storing program code, wherein the program code is capable of being invoked by a processor to execute the method for accounting product carbon footprint based on ICM according to any one of claims 1 to 6.

**Amended claims in accordance with Rule 137(2) EPC.**

1. A method for accounting product carbon footprint based on Integrated Carbon-right Method, ICM, comprising:

acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material (S11); and

accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material (S12);

wherein the amount of carbon emission is expressed as:

$$E_M = (1 - R) \times E_V + R \times E_R - \alpha \times (E_V + E_R),$$

wherein, $E_M$ is the amount of carbon emission, $R$ is the proportion of the recycled material, $(1 - R)$ is the proportion of the raw material, $E_V$ and $E_R$ are respectively the first unit carbon emission and the second unit carbon emission, and $\alpha$ is the carbon right factor.

2. The method for accounting product carbon footprint based on ICM according to claim 1, wherein the amount of carbon emission is in negative correlation with a carbon right factor obtained according to the regional development index, the utilization rate of green product and the recovery rate of the recycled material, wherein:

the carbon right factor is obtained by multiplying the regional development index representing development level in different regions, the utilization rate of green product representing contribution degree for carbon dioxide peaking and carbon neutrality, and the recovery rate of the recycled material representing a technique for saving resource; and

a carbon right is obtained according to the carbon right factor as well as a first unit carbon emission corresponding to production from a raw material and a second unit carbon emission corresponding to performing production from a recycled material, resulting in that the carbon right is in negative correlation with the amount of carbon emission, wherein the data of carbon footprint includes the first unit carbon emission and the second unit carbon emission.

3. The method for accounting product carbon footprint based on ICM according to claim 2, wherein the carbon right is in negative correlation with the amount of carbon emission, comprising:

the carbon right as an absolute value for a negative portion in the accounting formula for carbon footprint is in negative correlation with the amount of carbon emission, and the carbon emission from production as a positive portion in the accounting formula for carbon footprint is in positive correlation with the amount of carbon emission, resulting in that the accounting formula for carbon footprint is obtained, wherein the data of carbon footprint includes the carbon emission from production.

4. The method for accounting product carbon footprint based on ICM according to claim 3, wherein obtaining the carbon emission from production comprising:

obtaining an amount of carbon emission for the raw material according to a proportion of the raw material put into production and the first unit carbon emission, and obtaining an amount of carbon emission for the recycled material according to a proportion of the recycled material and the second unit carbon emission; and

obtaining the carbon emission from production according to a sum of the amount of carbon emission for the raw material and the amount of carbon emission for the recycled material.

5. The method for accounting product carbon footprint based on ICM according to any one of claims 1-2, wherein the recovery rate of the recycled material is an average recovery rate of the recycled material, wherein the recycled material comprises at least one of nickel, cobalt, manganese or lithium,

the utilization rate of green product comprises regional permeability of new energy product, wherein the permeability of new energy product comprises permeability of new energy vehicle;

the carbon right factor is expressed as:

$$\alpha = (1 - \beta) \times P_r \times \frac{1}{n}\sum i,$$

wherein, $\beta$ is the regional development index, $P_r$ is the permeability of new energy vehicle, $\Sigma i$ is a sum of recovery rates of any n of nickel, cobalt, manganese or lithium, n is 1, 2, 3 or 4, and $i$ is the recovery rate of nickel, cobalt, manganese or lithium.

6. A device for accounting product carbon footprint based on ICM, comprising a data acquisition unit and a unit for accounting carbon footprint, wherein,

the data acquisition unit is configured to acquire data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material; and

the unit for accounting carbon footprint is configured to account the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material;

wherein the amount of carbon emission is expressed as:

$$E_M = (1 - R) \times E_V + R \times E_R - \alpha \times (E_V + E_R)$$

wherein, $E_M$ is the amount of carbon emission, $R$ is the proportion of the recycled material, $(1 - R)$ is the proportion of the raw material, $E_V$ and $E_R$ are respectively the first unit carbon emission and the second unit carbon emission, and $\alpha$ is the carbon right factor.

7. The device for accounting product carbon footprint based on ICM according to claim 6, further comprising: an instruction receiving unit, configured to receive acquisition instruction sent by a user, and to send the acquisition instruction to the unit for accounting carbon footprint, wherein the acquisition instruction comprises the acquisition interval, duration of the period and the system boundary range, and

an analytical interaction unit, configured to create an analysis report after receiving the amount of carbon emission sent by the unit for accounting carbon footprint, and to send the analysis report to the user.

8. An electronic equipment, comprising:

a memory;

one or more processors coupled with the memory; and

one or more application programs, wherein the one or more application programs are stored in the memory and configured to be executed by the one or more processors, and the one or more application programs is configured to execute the method for accounting product carbon footprint based on ICM according to any one of claims 1 to 5.

9. A computer readable storage medium storing program code, wherein the program code is capable of being invoked by a processor to execute the method for accounting product carbon footprint based on ICM according to any one of claims 1 to 5.

Start

Acquiring data of carbon footprint within a predetermined system boundary range on a production line for several times within one period at a predetermined acquisition interval, according to an obtained acquisition instruction, wherein the data of carbon footprint comprises regional development index, utilization rate of green product and recovery rate of recycled material

S11

Accounting the carbon footprint according to the data of carbon footprint and a predetermined accounting formula for carbon footprint, to obtain an amount of carbon emission within the period, wherein the amount of carbon emission is in negative correlation with a carbon right factor obtained according to the regional development index, the utilization rate of green product and the recovery rate of the recycled material

S12

End

FIG. 1

| Recycling route for preparing cathode material: | Preparing waste battery into powder | Preparing a salt solution | Preparing a precursor | Preparing a cathode material |

| Raw ore route for preparing cathode material: | Preparing a crude salt from raw ore | Preparing the crude salt into a fine salt | Preparing a precursor | Preparing a cathode material |

FIG. 2

Data acquisition unit — 31

Unit for accounting carbon footprint — 32

FIG. 3

Instruction receiving unit — 30

Data acquisition unit — 31

Unit for accounting
carbon footprint — 32

Analytical interaction unit — 33

FIG. 4

FIG. 5

Europäisches
Patentamt

European
Patent Office

Office européen
des brevets

# EUROPEAN SEARCH REPORT

Application Number

EP 23 21 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Muhammad Tariq Majeed: "Renewable energy, circular economy indicators and environmental quality: A global evidence of 131 countries with heterogeneous income groups", Pakistan Journal of Commerce and Social Sciences, 31 December 2020 (2020-12-31), pages 866-912, XP093164566, Lahore Retrieved from the Internet: URL:https://www.econstor.eu/bitstream/10419/228728/1/1744944954.pdf [retrieved on 2024-05-21] * page 878 - page 880 * | 1-10 | INV. G06Q10/063 G06Q10/30 |

-----

TECHNICAL FIELDS
SEARCHED (IPC)

G06Q

The present search report has been drawn up for all claims

| Place of search | Date of completion of the search | Examiner |
|---|---|---|
| Munich | 21 May 2024 | Diaz Calvo, Sonia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................

& : member of the same patent family, corresponding
   document

EPO FORM 1503 03.82 (P04C01)